## Europäisches Patentamt
## European Patent Office
## Office européen des brevets

(19)

(11) Publication number: **0 005 885**
**B1**

(12) **EUROPEAN PATENT SPECIFICATION**

(45) Date of publication of patent specification: **11.05.83**

(51) Int. Cl.³: **C 01 B 25/28**

(21) Application number: **79200264.4**

(22) Date of filing: **30.05.79**

(54) Process and device for the preparation of a product containing ammonium orthophosphate.

(30) Priority: **01.06.78 NL 7805957**

(43) Date of publication of application:
**12.12.79 Bulletin 79/25**

(45) Publication of the grant of the patent:
**11.05.83 Bulletin 83/19**

(84) Designated Contracting States:
**AT BE DE FR GB IT NL SE**

(56) References cited:
**DE - A - 1 567 439**
**FR - A - 2 083 935**
**GB - A - 1 230 759**
**GB - A - 1 252 651**
**US - A - 3 826 474**
**US - A - 3 950 495**

(73) Proprietor: **UNIE VAN KUNSTMESTFABRIEKEN B.V.**
**Postbus 45**
**NL-3500 AA Utrecht (NL)**

(72) Inventor: **Hendriks, Petrus Franciscus Alphonsus Maria**
**Dr. Poelslaan 11**
**NL-6162 BE Geleen (NL)**
Inventor: **Jansen, Arie**
**van Beethovenstraat 56**
**2983 BV Ridderkerk (NL)**
Inventor: **Van Den Berg, Willem Bonno**
**Molenstraat 84**
**4841 CG Prinsenbeek (NL)**
Inventor: **Hoek, Cornelis**
**R. van Gelrestraat 38**
**6118 BR Nieuwstadt (NL)**

(74) Representative: **Roeffen, Wilhelmus Johannes Maria et al,**
**OCTROOIBUREAU DSM Postbus 9**
**NL-6160 MA Geleen (NL)**

# 0 005 885

Process and device for the preparation of a product containing ammonium orthophosphate

The invention relates to a process and devices for the preparation of a product containing ammonium orthophosphate and substantially free of ammonium polyphosphate from ammonia and phosphoric acid, in which phosphoric acid and gaseous ammonia are put together by means of a two-phase spraying device provided with two coaxial ducts through the outer one of which the ammonia and through the inner one of which the phosphoric acid is passed.

A process of this type is known from GB—A—1,252,651. In the process described in said specification the ammonia and the phosphoric acid are passed through a joint outflow nozzle of a spraying mechanism and sprayed onto a bed of ammonium salt granules that are kept moving in a rotating drum. Inside the spraying mechanism the reactants only get into very imperfect contact after discharge from the nozzle. Consequently, the mixing is very incomplete and, as a result, the reaction is effected substantially in the bed of solid particles in the drum. In this process no homogeneous product is obtained from the spraying device alone. To obtain a homogeneous product, spraying onto the moving bed of granules is necessary, so that homogenization can be effected in this bed. Another drawback of this process is that part of the ammonia leaving the spraying mechanism as a gas does not reach the bed of solid particles and is retained in the air over the bed in the drum. This ammonia is withdrawn: from the drum together with the air and is recovered in a washing device by washing with an acid. It is clear that the required capacity of the washing device must be larger as the amount of ammonia that does not react with the phosphoric acid in the drum is larger. In addition, when the amount of ammonia to be washed increases, there is a greater chance of reaching an $NH_3/H_3PO_4$ ratio in the washing acid at which mono-ammonium dihydrogen phosphate crystallizes and undesirable deposits are formed.

The invention aims at providing a process in which the drawbacks of the known process do not occur or only to a considerably less extent. According to the invention, this is achieved by extremely fast outflow rates of the reactants from the spraying device, the axial outflow rate of the phosphoric acid from the two-phase spraying device being from 1—10 m/sec and the axial outflow rate of the ammonia is from 200—1000 m/sec (N.T.P.) the two flows being discharged from the spraying device within a cylindrical reaction zone arranged coaxially with the spraying device and having a diameter of 2—4 times the discharge diameter of the outer ammonia discharge duct of the two-phase spraying device and a length of 10—25 times diameter of the reaction zone.

The unit m/sec (N.T.P.) used for the outflow rate of the ammonia indicates that the actual rate has been recalculated to the rate the ammonia would have at normal temperature and pressure.

The use of high outflow rates within the limits specified for the two reactants within a confined reaction zone in which lateral spreading of the flows from the two-phase spraying device is restricted causes the reactants to be mixed thoroughly so that a high degree of conversion is reached and a virtually homogeneous product substantially consisting of ammonium orthophosphates is obtained without the necessity of further homogenization, e.g. in a moving bed of granules that have already formed. Thanks to the high rates and the consequent very short residence time in the reaction zone, hardly any or no ammonium polyphosphates are formed even at higher temperatures. If the starting material is phosphoric acid prepared by the so-called wet route, iron and aluminium phosphates that are unavoidable in this type of product will be present, i.a., in addition to the ammonium orthophosphates.

Use is preferably made of a two-phase spraying device in which the average diameter and, if so desired, the cross-sectional area of the annular ammonia duct gradually decreases towards the end, as seen in the direction of flow, so that the outgoing ammonia flow hits the central phosphoric-acid flow on all sides and at high speed. Further improvement of the contact between the two reactants can be achieved in that the mixture flowing through the reaction zone is passed to the outflow opening by way of at least two baffle plates arranged one after the other as seen in the direction of flow each twisted along the longitudinal axis of the reaction cylinder in a hand opposite to that of an adjacent baffle and having a dimension normal to the direction of flow that is equal to the diameter of the reaction zone. In this case the length of the reaction zone is taken to be the distance between the outflow openings of the two-phase spraying device and the first baffle plate.

The use of said baffle plates is particularly important if products with a molar $NH_3/H_3PO_4$ ratio of over 1.2:1 are to be prepared, but is also favourable in the preparation of products in which this ratio is lower. The molar $NH_3/H_3PO_4$ ratio here denotes the ratio between the number of moles of $NH_3$ bound to water-soluble $H_3PO_4$ and the number of moles of this water-soluble $H_3PO_4$.

In preparing products with a molar $NH_3/H_3PO_4$ ratio of up to 1.5:1, the process according to the invention permits of reaching an $NH_3$ efficiency of over 90%, which means that less than 10% of the ammonia fed in leaves the reaction zone as such. When this ammonia is recovered by washing with phosphoric acid, this leads to a molar $NH_3/H_3PO_4$ ratio of at most 0.15:1, which is not objectionable. It has been found that as the $P_2O_5$ content of the phosphoric acid used is lower, a higher molar $NH_3/H_3PO_4$ ratio and a higher $NH_3$ efficiency are obtained. In this case, the moisture content of the product naturally increases as well. In the process according to the invention, the amount of ammonia that will

2

not react with the phosphoric acid can previously be determined accurately by control of the concentration of the phosphoric acid and selection of the molar $NH_3/H_3PO_4$ ratio. Proper selection of the $P_2O_5$ content of the phosphoric acid in the range below 45% permits of reaching almost complete conversion of the ammonia fed in, while a product is formed that contains up to 50 moles % of diammonium monohydrogen phosphate and the desired amount of water in addition to monoammonium dihydrogen phosphate.

This is particularly suitable if the product is to be grandulated, which can, for instance, be effected by distributing it in a known way onto or in a moving bed of granules that have already formed, such as a bed of granules formed in a granulating drum, as a lower amount of water need be evaporated. In dependence on the recycling ratio (i.e. the ratio of the amount of product recycled to the amount of product to be granulated), the moisture content of the product supplied from the reaction zone to the granular bed can be so chosen that after-drying of the granulated product is superfluous. If production is followed immediately by granulation, use will generally be made of phosphoric acid with a $P_2O_5$ content of over 40%, as, at lower concentrations, comparatively high recycling ratios are required to avoid over-granulation that accompanies the high moisture content.

The product formed in the reaction zone can be processed as such without altering the composition.

The process according to the invention makes it possible directly to prepare a product that substantially consists of monoammonium dihydrogen phosphate and has a molar $NH_3/H_3PO_4$ ratio of, e.g., 1.1:1. Mixtures of monoammonium dihydrogen phosphate and diammonium monohydrogen phosphate with a molar $NH_3/H_3PO_4$ ratio of up to about 1.5:1 can also be prepared in one step. But the use of the process according to the invention moreover makes it possible to prepare products with a high content of diammonium monohydrogen phosphate, such as products with a molar $NH_3/H_3PO_4$ ratio of 1.6—1.8. To this end a product with a molar $NH_3/H_3PO_4$ ratio of 1.25—1.40 may be prepared in the reaction zone, and then granulated in a moving bed of granules that have already formed, as described above, while ammonia is fed to the granular bed to convert the phosphoric acid further. The first part of the ammonia-treatment of the phosphoric acid then proceeds with a high $NH_3$ efficiency which approximates to 100%. Furthermore, when use is made of phosphoric acid with a $P_2O_5$ content of 45—46%, the resulting product in the reaction zone has such a moisture content that a low recycling ratio suffices. This ratio may vary between 1.5:1 and 6:1. When the product to be recycled is cooled and, hence part of the reaction heat is thus removed, a lower recycling ratio may of course be used. In that case a separate drying treatment may even become fully superfluous. If still other solid substances. e.g. potassium salts, are fed to the bed, said ratio also depends on the amount of such additions.

The invention furthermore relates to an apparatus for carrying out the process described above. This apparatus is provided with a two-phase spraying device that comprises two coaxial ducts that are narrower at the outflow ends and debouch into a common space and is characterized in that the two-phase spraying device debouches into one end of a coaxial cylindrical space that is provided with at least one discharge opening at the other end, has a diameter of 2—4 times the outer diameter of the annular outflow opening of the outer duct, and has a length of 10—25 times the first-mentioned diameter.

In a special embodiment of this apparatus, which is suitable for the preparation of products that contain considerable amounts of diammonium monohydrogen orthophosphate in addition to monoammonium dihydrogen orthophosphate, the cylindrical space accommodates at least two oppositely twisted baffle plates arranged after each other and having a dimension normal to the central axis of the cylindrical space that is equal to the diameter of this space.

The invention will be elucidated with reference to the drawing annexed.

Figure 1 shows a longitudinal section of an apparatus that can be used to effect the process according to the invention;

Figure 2 is a diagram of an apparatus according to Figure 1 arranged in a granulating drum;

Figure 3 shows a section through the device of Figure 2 along A—A.

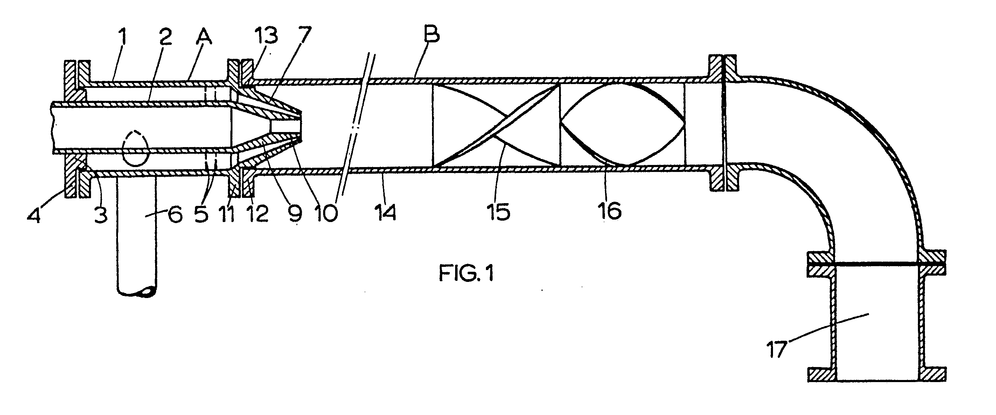

In Figure 1 the two-phase spraying device is generally denoted by A and the reaction zone by B. The two-phase spraying device A is built up of a cylindrical part 1 with a central tube 2 kept in place by the centring edge 3 of flange 4 and one or more diffuser rings 5, which may be two or more annular perforated plates that are so arranged that the apertures in consecutive rings are staggered. The cylindrical part 1 is provided with a feed tube 6 fitted tangentially and, near the outflow end, changes into a conically constricting part 7. The outflow end of tube 2, which is in the outflow end of the cylindrical part 1, changes internally into a narrower cylindrical part 10 by way of a conical part 9. Externally, the outflow end of tube 2 is fully conical with an apex angle that is smaller than the apex angle of the conical part 7 of cylindrical part 1. The average conical angle of the constricting part of the annular ammonia duct ranges between 30 and 35°.

The two-phase spraying device A is so fitted to the cylindrical part 14 accommodating reaction zone B by means of flanges 11 and 12 and centring edge 13 that the central lines of two-phase spraying device A and cylindrical part 14 coincide. The internal diameter of the last part is 2—4, e.g. 3 times the outer diameter of the annular outflow opening of cylindrical part 1. The length of cylindrical part 14, which is not shown in full in the drawing, amounts to 10—25, e.g. 18 times the diameter. The cylindrical part 14 need not be straight. For instance, with a view to the arrangement of the device in or near a granulating device, it may be desirable to provide said part with one or more bends, e.g. a 90° bend, so that the two-phase spraying device A and the reactor part B can be arranged approximately horizontally and the discharge from the reactor cylinder can be directed downwards. The cylindrical part 14 may accommodate two or more blades 15 and 16 with a special shape. These blades are shaped from rectangular flat plate section with a length of at least 1.5 times the width which corresponds to the diameter of the cylindrical part 14. The plate sections have been so twisted about their longitudinal axes that the ends are twisted about 180° with respect to each other. The twist of consecutive blades is alternately clock-wise and counterclock-wise. The distance between the outflow end of the two-phase spraying device and the first blade is, for instance, 10 times the diameter of the cylindrical part 14, but at least 8 times this diameter. The end of the cylindrical part 14 is provided with a discharge opening 17. This opening has a cross-section that is equal to the cross-section of cylindrical part 14, but may be smaller, if desired. If the reaction product to be discharged from the reaction zone is to be distributed, e.g. in or onto a granulation bed, a branched discharge part may be fitted. The total surface area of the outflow openings of the branches should then correspond to the cross-sectional area of the cylindrical part before the branched part.

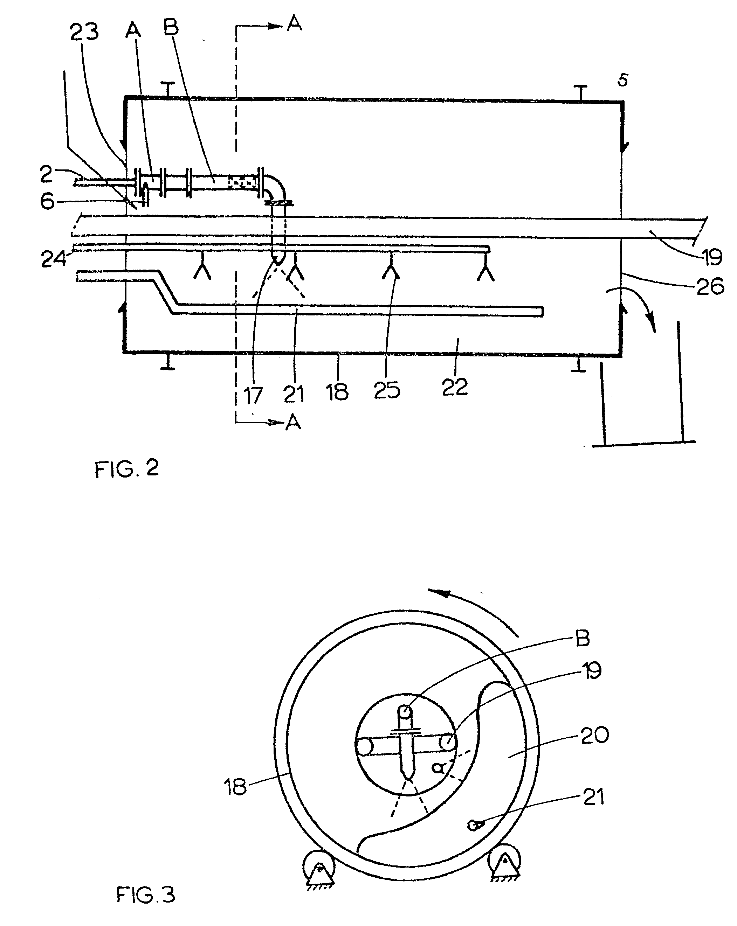

One or more of the devices shown in Figure 1 may be arranged in or over a granulating device. This may be, for instance, a granulating drum, as shown in Figures 2 and 3. With a view to the space available and the necessary supporting means, the two-phase spraying device A with reactor part B is so arranged that its central axis is approximately parallel to the central axis of drum 18 and the discharge end of the reactor part is bent downwards through an angle of about 90°, as stated above. It debouches into the drum at such a height that, during operation, the discharge openings are at some distance over the bed 20 of granules that have formed.

Drum 18 is arranged at a slight slant and, if necessary, contains a conduit 21 for the supply of liquid ammonia to the bed of granules formed. The higher end of the drum is provided with a central opening 23 through which the recycling product is passed into the drum and through which also the supporting means 19 and the ammonia conduit 21 extend into the drum. The supporting means may bear not only the two-phase spraying device with the reactor parts, but also a conduit 24 with spraying members 25 for liquid phase. The lower end of the drum has a central opening 26 through which the granulated product is discharged.

The process according to the invention is carried out by means of the above apparatus as follows. Gaseous ammonia is fed to the cylindrical part 1 of two-phase spraying device A through feed line 6. This conduit debouches tangentially into cylindrical part 1, but it might also be connected radially. In that case, however, severe wear of tube 2 may occur at the place of inflow and the place diametrically opposed. A tangential feed moreover gives a better distribution of the ammonia over the annular cross-section of the space between cylindrical part 1 and tube 2. A uniform flow rate along the circumference of the annular outflow opening is effected, at a slight pressure drop, by the diffuser rings 5, so that the ammonia flows eveny towards the outflow opening and leaves this opening while it is accurately directed towards the centre of the reaction zone. A small amount of steam of 0.5—3% by weight is added continuously to the ammonia in order to prevent formation and deposition of iron and aluminium phosphates. An amount of no more than 1—2% by weight usually suffices. Such small amounts of steam have no influence on the composition of the product. Phosphoric acid with a $P_2O_5$ concentration of 30—54% is fed in through central tube 2. This may be fresh acid, but it may also be supplied from a device in which $NH_3$ and dust are removed by means of fresh phosphoric acid from the air discharged from a granulating device. The dimensions of the annular outflow opening through which the ammonia flows from the cylindrical part 1 into the cylindrical part 14 of reaction zone B have been so chosen that the axial velocity of the ammonia flow ranges between 200 and 1000 m/sec (N.T.P.), e.g. 700 m per second (N.T.P.). This velocity approximately corresponds to the velocity of sound. The outflow opening of the tube 2 has such a diameter that the phosphoric acid flows into reaction zone B with an axial velocity of 1—10 m/sec, e.g. 7 m/sec. The total pressure difference across the two reaction zones A and B is, for instance, 200—400 kPa. Thanks to the velocities used, the ammonia and the phosphoric acid are very soon mixed thoroughly so that the ammonia combines with the phosphoric acid in a very short time to form monoammonium dihydrogen phosphate and, if the ratio between the amounts of ammonia and the $P_2O_5$ fed in in the phosphoric acid is sufficient, to form diammonium monohydrogen phosphate. This amount of $P_2O_5$ naturally depends on the amount of phosphoric acid and its concentration. If the phosphoric acid has a comparatively low $P_2O_5$ concentration, e.g. of below 40%, it is true that products with a high molar $NH_3/H_3PO_4$ ratio can be prepared while the proportion of free ammonia, i.e. the percentage of ammonia fed in that leaves the reaction zone as such along with the product, is low, but this product then contains much moisture. In the case of granulation this gives rise to over-granulation: too many coarse granules are formed and even lumps are formed, unless a sufficiently high recycling ratio is applied and/or a sufficient amount of solid substances to be admixed, such as e.g. potassium chloride, is fed in. At a high $P_2O_5$ content of the phosphoric acid, this risk does not nor hardly exist, but the proportion of free ammonia is higher and lower molar $NH_3/H_3PO_4$ ratios will have to be put up with. However, if blades 15, 16 are present, the mixing is improved considerably because the rotation imparted to the reaction mixture by the tangential feed of the ammonia changes direction several times. The result is a higher molar $NH_3/H_3PO_4$ ratio of the product leaving reaction zone B. The use of blades is necessary if molar $NH_3/H_3PO_4$ ratios of over 1.2:1 are to be reached. The special shape of the blades offers the advantage that the mixing is improved considerably without large pressure losses. 2 blades are usually sufficient and a greater number usually does not give more favourable results. The high velocities used lead to a very short residence time of the reaction mixture in the reaction zone B. As a result, hardly any heat of reaction can be removed and the temperature of the reaction mixture rises to 180—225°C near discharge opening 17. However, the time available is too short for the formation of an inadmissible amount of ammonium polyphosphates. The reaction product is discharged from the reaction zone through discharge opening 17 to a collecting space in which atmospheric pressure prevails. At the attendant sudden expansion the reaction product is atomized into fine solid particles, while a considerable part of the water originally present evaporates.

If the product of fine grains thus obtained is to be granulated into coarser granules, it is spread over a bed of granules that have already formed, e.g. in a granulating drum according to Figures 2 and 3. In this bed the molar $NH_3/H_3PO_4$ ratio can also be raised to, e.g., 1.6 by distributing liquid ammonia in the bed through conduit 21.

The product discharged from the drum through opening 26 is classified in a known way. The product that is too coarse is crushed and recycled together with the product that is too fine in an amount that ensures that the reaction heat released in the ammonia-treatment of phosphoric acid is removed. A ratio of 3—6 parts of recycled product to 1 part of fresh supply usually suffices for this purpose.

Some experiments were carried out on the basis of the process according to the invention. The data and the results of these experiments are mentioned in the examples below. The experiments were carried out in equipment arranged in parallel to an existing production unit and connected to the accessory granulating drum, drying drum, dust-collecting system and a washing installation in which the $NH_3$ discharged together with the air from the granulating drum and, possibly, the drying drum and the dust in the air from the dust-collecting system were recovered by washing with fresh phosphoric acid. The washing acid used, which consequently contained an amount of $NH_3$, was used as reactor feed.

Example 1

Phosphoric acid and $NH_3$ were made to react in a reactor according to Figure 1, but without blades 15 and 16. The major dimensions of the reactor were as follows:

| | |
|---|---|
| Diameter of cylindrical part 1 | 75 mm |
| Diameter of reaction zone B | 75 mm |
| Length of reaction zone B | 1350 mm |
| Cross-section of ammonia outflow opening | 325 mm² |
| Cross-section of phosphoric-acid outflow opening | 141 mm² |
| Number of diffuser rings | 2 |
| Ratio of length to diameter of reaction zone | 18:1 |

In experiments 1 and 2 the diameter of discharge opening 17 was 35 mm, in experiment 3 70 mm. The discharge was directed downwards through a 90°C bend. In the reactor, a product consisting almost completely of monoammonium dihydrogen phosphate was prepared from phosphoric acid with a $P_2O_5$ content of 43.0%. The amounts of phosphoric acid and $NH_3$ fed in, the feed rates, the molar $NH_3/H_3PO_4$ ratio of the resulting product are given in Table 1. The $NH_3$ efficiency is the quotient of the molar $NH_3/H_3PO_4$ ratio in the product and the same ratio calculated from the total amounts of $NH_3$ and $H_3PO_4$ fed in, and, consequently, is a measure of the amount of $NH_3$ converted. The amount of $NH_3$ already present in the phosphoric acid is included. The product flowed freely from the discharge opening onto a stationary surface. It was established by means of samples drawn from various spots of the resulting heap that the product showed slight inhomogeneity only. But when similar experiments were carried out with a reactor in which the ratio of length to diameter of the reaction zone was 5:1, the inhomogeneity was considerably higher.

Example 2

6 blades 15 and 16 were mounted in a reactor in which the cross-section of the ammonia-outflow opening was 300 m² and the other dimensions were similar to those of the reactor used in Example 1. The diameter of discharge opening 17 was always 35 mm. Phosphoric acid with a $P_2O_5$ content of 44.7% was used to prepare a product that contained a considerable amount of diammonium monohydrogen phosphate in addition to monoammonium dihydrogen phosphate. The data about the starting materials used and the resulting products are compiled in Table 2.

The products were fully homogeneous. In experiment 6, in which the amount of $NH_3$ fed in and the feed pressure used were comparatively low, it was found to be impossible to avoid deposition of the product, is spite of regularly purging the reactor with steam. The result was that the feed pressure for a feeding capacity of 500 m³ $NH_3$/h (N.T.P.) rose from 284 to 432 kPa in 6 days and the noise level became inadmissibly high. These phenomena no longer occurred with an increased amount of $NH_3$ and the required feed pressure.

The product leaving the reactor was collected in the granulating drum, in which further conversion of phosphoric acid was effected by means of liquid $NH_3$. Here, too, a small part of the $NH_3$ fed in was not converted and passed from the drum to the washing device along with the air. The absorption of this amount of $NH_3$ in the washing acid gave rise to an increase of the molar $NH_3/H_3PO_4$ ratio of the feed acid to the values stated in Table 2.

Example 3

The reactor used for the experiments of Example 1 was equipped with a discharge opening 17 with a diameter of 70 mm and 6 blades 15 and 16. Here the phosphoric acid fed in was diluted by addition of water. A small amount of steam was added to the $NH_3$. The data and results are given in Table 3.

As in the experiments of Example 2, liquid $NH_3$ was fed into the granulating drum and the unconverted part of it was absorbed in the phosphoric acid in the washing device.

In experiments 13 through 15 the product from the reactor has so high a moisture content that deposits and lumps formed in the granulating drum, which had to be removed several times each hour. The granulate became so coarse that the experiments had to be stopped after some time. If so desired, the product obtained in these experiments can be processed into liquid fertilizers.

Example 4

A product substantially consisting of diammonium monohydrogen phosphate was prepared in a device according to Figure 2, but with two parallel reactors instead of one. At different distances from the ammonia and phosphoric acid outflow openings, the two reactors were provided with two discharge pipes directly downwards.

In contrast to the reactors used in the experiments of Examples 1 through 3, two baffle plates 15, 16 were now present. Use was made of phosphoric acid with a $P_2O_5$ content of between 47.5 and 49.5%. The outflow rate of the phosphoric acid varied from 3.4 to 4.9 m/sec, that of the ammonia from 449 to 565 m/sec (N.T.P.). The length/diameter ratio of the reaction zones in the two reactors was about 18:1.

The product discharged from the reactors had a molar $NH_3/H_3PO_4$ ratio that varied from 1.27 to 1.35, in dependence on, i.a. the concentration of the phosphoric acid and the amounts of this acid and of ammonia fed in. This ratio was raised to a value varying from 1.69—1.75 by supplying liquid ammonia to the bed in the granulating drum.

Example 1

TABLE 1

| Exp. no. | $NH_3$-feed | | operating pressure $NH_3$kPa | phosphoric-acid feed | | product | | $NH_3$-efficiency % |
|---|---|---|---|---|---|---|---|---|
| | $m^3/h$ (N.T.P.) | m/sec (N.T.P.) | | $m^3/h$ | m/sec | mol. $NH_3/$ $H_3PO_4$ | mol. $NH_3/$ $H_3PO_4$ | |
| 1 | 835 | 714 | 334 | 4.0 | 8.0 | 0.18 | 0.95 | 80 |
| 2 | 840 | 718 | | 4.05 | 8.0 | 0.17 | 1.08 | 92 |
| 3 | 945 | 808 | | 4.5 | 8.8 | 0.22 | 0.89 | 85 |
| 4 | 1020 | 872 | | 5.0 | 9.8 | 0.27 | 0.98 | 78 |
| 5 | 1050 | 897 | | 5.0 | 9.8 | 0.27 | 1.02 | 80 |

Example 2

TABLE 2

| Exp. no. | $NH_3$-feed | | operating pressure $NH_3$kPa | phosphoric-acid feed | | product | | moisture % | $NH_3$-efficiency % |
|---|---|---|---|---|---|---|---|---|---|
| | $m^3/h$ (N.T.P.) | m/sec (N.T.P.) | | $m^3/h$ | m/sec | mol. $NH_3/$ $H_3PO_4$ | mol. $NH_3/$ $H_3PO_4$ | | |
| 6 | 500 | 463 | 284 | 2.5 | 5.0 | 0.36 | 1.30 | | |
| 7 | 587 | 543 | 373 | 2.5 | 5.0 | 0.35 | 1.35 | 3.8 | 92.9 |
| 8 | 704 | 652 | 412 | 3.0 | 5.8 | 0.35 | 1.35 | 4.0 | 96.4 |
| 9 | 587 | 543 | 333 | 2.5 | 5.0 | 0.35 | 1.35 | 5.9 | 96.4 |
| 10 | 636 | 588 | 343 | 2.5 | 5.0 | 0.35 | 1.36 | 7.3 | 91.3 |

Example 3

TABLE 3

| Exp. no. | NH₃-feed m³/h (N.T.P.) | m/sec (N.T.P.) | operating pressure NH₃kPa | phosphoric-acid feed % P₂O₅ | m³/h | m/sec | product mol. NH₃/ H₃PO₄ | mol. NH₃/ H₃PO₄ | moisture % | NH₃- efficiency % |
|---|---|---|---|---|---|---|---|---|---|---|
| 11 | 1026 | 857 | 383 | 45.6 | 5.05 | 10.0 | 0.42 | 1.23 | 6.2 | 93.2 |
| 12 | 1108 | 947 | 412 | 44.6 | 4.95 | 9.7 | 0.38 | 1.31 | 8.5 | 93.6 |
| 13 | 1170 | 1000 | 461 | 40.5 | 5.0 | 9.8 | 0.35 | 1.49 | 16.2 | 93.9 |
| 14 | 964 | 824 | 353 | 40.5 | 5.0 | 9.8 | 0.35 | 1.34 | 19.0 | 97.7 |
| 15 | 1067 | 912 | 412 | 40.5 | 5.0 | 9.8 | 0.35 | 1.44 | 16.3 | 97.4 |

**Claims**

1. Process for the preparation of a product containing ammonium orthophosphate and substantially free of ammonium polyphosphate from ammonia and phosphoric acid, in which phosphoric acid and gaseous ammonia are put together by means of a two-phase spraying device provided with two coaxial ducts through the outer one of which the ammonia and through the inner one of which the phosphoric acid is passed, characterized in that the axial outflow rate of the phosphoric acid from the two-phase spraying device is from 1—10 m/sec and the axial outflow rate of the ammonia therefrom is from 200—1000 m/sec (N.T.P.), the two flows being discharged from the spraying device within a cylindrical reaction zone arranged coaxially with the spraying device and having a diameter of 2—4 times the discharge diameter of the outer ammonia discharge duct of the two-phase spraying device and a length of 10—25 times said diameter of the reaction zone, the reaction zone debouching into a collecting space.

2. Process according to claim 1, characterized in that use is made of a two-phase spraying device in which the diameter and, if so desired, the cross-sectional area of the annular ammonia duct gradually decreases towards the end, as seen in the direction of flow.

3. Process according to claim 1 or 2, characterized in that the product leaving the reaction zone is granulated by distributing it onto or in a moving bed of granules that have already formed, while the granules thus formed are discharged.

4. Process according to claim 1, 2 or 3 used for the preparation of products containing monoammonium dihydrogen phosphate and diammonium monohydrogen phosphate, characterized in that the mixture flowing through the reaction zone is passed to the outflow opening by way of at least two baffle plates arranged one after the other as seen in the direction of flow each, being twisted along the longitudinal axis of the reaction cylinder in a hand opposite to that of an adjacent baffle, and having a dimension normal to the direction of flow that is equal to the diameter of the reaction zone.

5. Process according to claim 4, characterized in that a product with a molar $NH_3/H_3PO_4$ ratio of 1.25:1 to 1.40:1 is prepared in the reaction zone from phosphoric acid with a $P_2O_5$ content up to 45% and this product is granulated in a moving bed of granules that have already formed while so much ammonia is fed in that the molar $NH_3/H_3PO_4$ ratio in the granulated product is 1.6:1 to 1.8:1.

6. Process according to any one of the claims 1—5, characterized in that an amount of steam of 0.5—3% by weight calculated to the amount of ammonia is fed to the two-phase spraying device in addition to gaseous ammonia.

7. Device for carrying out the process according to claim 1 provided with a two-phase spraying device that comprises two coaxial ducts that are narrower at the outflow ends and debouch into a common space, characterized in that the two-phase spraying device debouches into one end of a coaxial cylindrical space that is provided with at least one discharge opening at the other end, has a diameter of 2—4 times the outer diameter of the annular outflow opening of the outer duct, and has a length of 10—25 times the first-mentioned diameter.

8. Device according to claim 7, characterized in that the cylindrical space accommodates at least two baffle plates arrnaged after each other, each being twisted along the longitudinal axis of the reaction cylinder in a hand opposite to that of an adjacent baffle, and having a dimension normal to the central axis of the cylindrical space that is equal to the diameter of this space.

**Patentansprüche**

1. Verfahren zur Herstellung eines Ammoniumorthophosphat enthaltenden Produktes, das im wesentlichen frei von Ammoniumpolyphosphat ist, aus Ammoniak und Phosphorsäure, bei dem Phosphorsäure und gasförmiges Ammoniak mittels einer Zweiphasen-Sprühvorrichtung zusammengebracht werden, welche mit zwei koaxialen Leitungen ausgestattet ist, durch deren äußere das Ammoniak und durch deren innere die Phosphorsäure geleitet wird, dadurch gekennzeichnet, daß die axiale Ausströmrate der Phosphorsäure aus der Zweiphasen-Sprühvorrichtung 1—10 m/s und die

7

axiale Ausströmrate des Ammoniaks 20—1000 m/s (N.T.P.) beträgt, wobei die beiden Ströme aus der Sprühvorrichtung innerhalb einer koaxial mit der Sprühvorrichtung angeordneten zylindrischen Reaktionszone ausgetragen werden, deren Durchmesser das 2-4-fache des Ausströmdurchmessers der äußeren Ammoniakleitung der Zweiphasen-Sprühvorrichtung und deren Länge das 10—25-fache des Durchmessers der Reaktionszone beträgt, welche Reaktionszone mündet in einen Sammelraum.

2. Verfahren nach Anspruch 1, dadurch gekennzeichnet, daß mit einer Zweiphasen-Sprühvorrichtung gearbeitet wird, in der der Durchmesser und, wenn gewünscht, die Querschnittsfläche der ringförmigen Ammoniakleitung gegen das Ende zu, in Strömungsrichtung gesehen, allmählich kleiner wird.

3. Verfahren nach Anspruch 1, dadurch gekennzeichnet, daß das die Reaktionszone verlassende Produkt granuliert wird, indem man es auf oder in einem bewegenden Bett von bereits gebildeten Körnern verteilt, während die so gebildeten Körner ausgetragen werden.

4. Verfahren nach Anspruch 1, 2 order 3 zur Herstellung von Produkten, welche Monoammoniumdihydrogenphosphat und Diammoniummonohydrogenphosphat einthalten, dadurch gekennzeichnet, daß das durch die Reaktionszone strömende Gemisch über mindestens zwei Prallplatten zur Austragsöffnung geführt wird, welche, in Strömungsrichtung gesehen, nacheinander angeordnet sind und deren jede entlang der Längsachse des Reaktionszylinders in entgegengesetztem Sinn wie die angrenzende Prallplatte verbogen ist und deren Abmessungen senkrecht zur Strömungsrichtung gleich dem Durchmesser der Reaktionszone ist.

5. Verfahren nach Anspruch 4, dadurch gekennzeichnet, daß in der Reaktionszone ein Produkt mit einem molaren $NH_3/H_3PO_4$-Verhältnis von 1,25:1 bis 1,40:1 aus Phosphorsäure mit einem $P_2O_5$%-Gehalt bis 45% hergestellt und dieses Produkt in einem bewegten Bett aus bereits gebildeten Körnern granuliert wird, während so viel Ammoniak zugeführt wird, daß das molare $NH_3/H_3PO_4$-Verhältnis in dem granulierten Produkt 1,6:1 bis 1,8:1 beträgt.

6. Verfahren nach einem der Ansprüche 1 bis 5, dadurch gekennzeichnet, daß zusätzlich zum gasförmigen Ammoniak 0,5 bis 3 Gew.% Wasser-dampf, berechnet auf die Menge an Ammoniak, in die Zweiphasen-Sprühvorrichtung eingebracht werden.

7. Vorrichtung zur Durchführung des Verfahrens gemäß Anspruch 1, die mit einer Zweiphasen-Sprühvorrichtung mit zwei koaxialen Leitungen, die sich an den Ausströmenden verengen und in einen gemeinsamen Raum münden, ausgestattet ist, dadurch gekennzeichnet, daß die Zweiphasen-Sprühvorrichtung in das eine Ende eines koaxialen zylindrischen Raumes mündet, der am anderen Ende mindestens eine Austragsöffnung aufweist und dessen Durchmesser das 2-4-fache des Außendurchmessers der ringförmigen Ausströmöffnung der äußeren Leitung und dessen Länge das 10—25-fache des erstgenannten Durchmessers beträgt.

8. Vorrichtung nach Anspruch 7, dadurch gekennzeichnet, dass in dem zylindrischen Raum mindestens zwei Prallplatten untergebracht sind, die nacheinander angeordnet sind und deren jede entlang der Längsachse des Reaktionszylinders in entgegengesetztem Sinn wie die angrenzende Prallplatte verbogen ist und deren Abmessung senkrecht zur Mittelachse des zylindrischen Raumes gleich dem Durchmesser dieses Raumes ist.

## Revendications

1. Procédé pour la préparation d'un produit solide contenant de l'orthophosphate d'ammonium, qui est essentiellement exempt de polyphosphate d'ammonium, à partir d'ammoniac et d'acide phosphorique, en réunissant l'acide phosphorique et l'ammoniac gazeux à l'aide d'un gicleur à deux phases qui est muni de deux canaux coaxiaux dont l'extérieur sert à amener l'ammoniac et l'intérieur à amener l'acide phosphorique, caractérisé en ce que la vitesse d'écoulement axiale de l'acide phosphorique du gicleur à deux phases est de 1—10 m/sec. et que la vitesse d'écoulement axiale de l'ammoniac est de 200—1000 Nm/sec. alors que les deux courants sont mis en contact l'un avec l'autre et mélangés intensivement dans une zone réactionnelle cylindrique, située dans le prolongement du gicleur à deux phases, dont le diamètre est de 2—4 fois le diamètre extérieur du courant d'ammoniac sortant du gicleur à deux phases et la longueur est de 10—25 fois le diamètre premier nommé, laquelle zone réactionnelle se décharge dans un espace collecteur.

2. Procédé selon la revendication 1, caractérisé en ce qu'on utilise un gicleur à deux phases dans lequel le diamètre, et éventuellement la surface de section du canal annulaire à ammoniac, diminuent régulièrement à leur extrémité dans le sens du courant.

3. Procédé selon l'une des revendications 1 et 2, caractérisé en ce que le produit sortant de la zone réactionnelle est granulé, en le répartissant sur ou dans un lit en mouvement de granules déjà formés, tout en évacuant les granules ainsi formés.

4. Procédé selon l'une des revendications 1, 2 et 3, utilisé pour la préparation de produits contenant du dihydrogénophosphate monoammonique et du monohydrogénophosphate biammonique, caractérisé en ce que le mélange, qui traverse la zone réactionnelle, est amené à l'ouverture d'écoulement, par l'intermédiaire d'au moins deux plaques de guidage, tordues en sens inverse l'une par rapport à l'autre et selonl'axe longitudinal du cylindre réactionnel et montées l'une après l'autre dans le sens du courant, la dimension de ces plaques de guidage, mesurée perpendiculairement sur le sens du courant, étant égale au diamètre de la zone réactionnelle.

5. Procédé selon la revendication 4, caractérisé en ce qu'on prépare, à partir d'acide phosphorique ayant une teneur en $P_2O_5$ jusqu'à 45%, dans la zone réactionnelle un produit dont le rapport molaire de $NH_3H_3PO_4$ est de 1,25:1—1,40:1 et que ce produit est granulé dans un lit en mouvement de granules déjà formés, tout en amenant une quantité d'ammoniac telle que le rapport molaire de $NH_3/H_3PO_4$ dans le produit granulé soit de 1,6:1 à 1,8:1.

6. Procédé selon l'une des revendications 1 à 5, caractérisé en ce qu'on amène au gicleur à deux phases, outre l'ammoniac gazeux, une quantité de vapeur de 0,5 à 3% en poids calculée par rapport à la quantité d'ammoniac.

7. Dispositif pour la mise en oeuvre du procédé selon la revendication 1, muni d'un gicleur à deux phases contenant deux canaux coaxiaux qui sont rétrécis à leur extrémité d'écoulement et qui se déchargent dans un espace commun, caractérisé en ce que le gicleur à deux phases se décharge dans une extrémité d'un espace cylindrique coaxial dont l'autre extrémité est munie d'une ouverture d'écoulement, et dont le diamètre est de 2—4 fois le diamètre extérieur de l'ouverture d'écoulement annulaire du canal extérieur et dont la longueur est de 10—25 fois le diamètre premier nommé.

8. Dispositif selon la revendication 7, caractérisé par au moins deux plaques de guidage, montées l'une après l'autre dans l'espace cylindrique et étant tordues en sens inverse l'une par rapport à l'autre alors que leur dimension mesurée perpendiculairement sur l'axe de l'espace cylindrique, est égale au diamètre de cet espace.

FIG. 1

0 005 885

FIG. 2

FIG.3